(19) **Europäisches Patentamt / European Patent Office / Office européen des brevets**

(11) **EP 2 447 317 B1**

(12) **EUROPEAN PATENT SPECIFICATION**

(45) Date of publication and mention
of the grant of the patent:
**02.07.2014  Bulletin 2014/27**

(51) Int Cl.:
***C08L 9/00*** *(2006.01)*   ***B60C 1/00*** *(2006.01)*
***C08K 3/00*** *(2006.01)*

(21) Application number: **09846539.6**

(22) Date of filing: **26.06.2009**

(86) International application number:
**PCT/JP2009/061780**

(87) International publication number:
**WO 2010/150409 (29.12.2010 Gazette 2010/52)**

(54) **RUBBER COMPOSITION AND TIRE COMPRISING THE SAME**

KAUTSCHUKZUSAMMENSETZUNG UND REIFEN DAMIT

COMPOSITION DE CAOUTCHOUC ET PNEUMATIQUE OBTENU À PARTIR DE CETTE COMPOSITION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**02.05.2012  Bulletin 2012/18**

(73) Proprietor: **Bridgestone Corporation**
**Tokyo 104-8340 (JP)**

(72) Inventors:
 • **TAKADO, Urara**
  **Kodaira-shi**
  **Tokyo 187-8531 (JP)**

 • **MASAKI, Koji**
  **Kodaira-shi**
  **Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
EP-A1- 2 060 604     EP-A2- 0 751 181
EP-A2- 1 535 959     WO-A1-2006/098103
WO-A1-2008/029814    WO-A1-2008/108408
JP-A- 10 053 671     JP-A- 2006 241 358
JP-A- 2007 039 614   JP-A- 2007 277 328

**Description**

TECHNICAL FIELD

This invention relates to a rubber composition and a tire using the rubber composition, and more particularly to a rubber composition having an excellent processability and capable of improving a wear resistance while highly balancing a wet performance and an on-ice performance of a tire.

BACKGROUND ART

Recently, requirements for a low fuel consumption and a safety of an automobile become more severer, and hence it is strongly desired to use a rubber composition being excellent in the grip performances of ice, wet, dry condition in addition to a wear resistance and fracture properties traditionally required in a rubber material for a tire tread of an automobile. Heretofore, as a method for improving the wear resistance and the fracture properties is conducted a method of using a liquid aromatic vinyl compound-conjugated diene compound copolymer having a low molecular weight instead of a softening agent such as an aromatic oil, but when styrene-butadiene copolymer is used as the aromatic vinyl compound-conjugated diene compound copolymer, there is a problem that the glass transition point (Tg) of the rubber composition is raised to deteriorate on-ice performance of a tire.

As a rubber composition against this problem and capable of increasing a coefficient of on-ice friction and highly balancing a flexibility at a low temperature, a grip performance on a wet road surface (wet performance) and a grip performance on ice and snow (on-ice performance), JP-A-H09-194640 discloses a rubber composition in which a low-molecular weight styrene-butadiene copolymer with a controlled microstructure is compounded in an amount of 2-50 parts by mass based on 100 parts by mass of a rubber component of a specified kind and expandable bubbles are included in a rubber matrix.

Also, as a rubber composition being excellent in the flexibility at a low temperature and good in the processability and capable of simultaneously establishing an on-ice performance and a wet performance of a tire and further improving a shrinkage factor, Japanese Patent No. 3457469 discloses a rubber composition in which a low-molecular weight polymer component having a bound styrene content of not more than 30 mass% is compounded in an amount of 30-120 parts by mass based on 100 parts by mass of a high-molecular weight polymer component having a bound styrene content of not more than 30 mass% and the bound styrene content and vinyl content satisfy a specified relational equation. EP0751181 discloses a rubber composition comprising a high molecular weight polymer with a weight average molecular weight of at least $30 \times 10^4$ and a low molecular weight component with a weight average molecular weight of from $0.2 \times 10^4$ to $8 \times 10^4$.

PRIOR ART DOCUMENT

PATENT DOCUMENT

        Patent Document 1: JP-A-H09-194640
        Patent Document 2: Japanese Patent No. 3457469

SUMMARY OF THE INVENTION

PROBLEMS TO BE SOLVED BY THE INVENTION

However, the inventors have made studies and found that although the rubber compositions disclosed in JP-A-H09-194640 and Japanese Patent No. 3457469 can simultaneously establish the grip performance on a wet road surface (wet performance) and the grip performance on ice and snow (on-ice performance), there is still room of improvement with respect to the effect of improving the wear resistance.

It is, therefore, an object of the invention to solve the above-mentioned problems of the conventional techniques and to provide a rubber composition having an excellent processability but also improving storage modulus (G') and loss tangent (tan $\delta$) at a low temperature and further improving a wear resistance. Also, it is another object of the invention to provide a tire using such a rubber composition in a tread portion and improving a wear resistance while highly balancing a wet performance and an on-ice performance.

**EP 2 447 317 B1**

MEANS FOR SOLVINNG THE PROBLEM

The inventors have made various studies in order to achieve the above objects and discovered that a low-molecular weight polymer component having specified amount of an aromatic vinyl compound bonded and weight average molecular weight and a filler are compounded in specified amounts based on a high-molecular weight polymer component having specified amount of an aromatic vinyl compound bonded and weight average molecular weight and further microstructures of the high-molecular weight polymer component and the low-molecular weight polymer component are controlled to thereby obtain a rubber composition having an excellent processability and capable of improving a wet performance, an on-ice performance and a wear resistance of a tire, and as a result, the invention has been accomplished.

That is, the first rubber composition according to the invention is characterized by compounding more than 1 part by mass but less than 30 parts by mass of a low-molecular weight polymer component (B), which is a copolymer of an aromatic vinyl compound and a conjugated diene compound or a polymer of a conjugated diene compound having an amount of the aromatic vinyl compound bonded ($S_2$) of less than 30 mass% and has a weight average molecular weight as converted to polystyrene of $4.0 \times 10^4$-$8.0 \times 10^4$, and not less than 5 parts by mass of a filler (C) based on 100 parts by mass of a high-molecular weight polymer component (A), which is a copolymer of an aromatic vinyl compound and a conjugated diene compound or a polymer of a conjugated diene compound having an amount of the aromatic vinyl compound bonded ($S_1$) of not more than 80 mass% and has a weight average molecular weight as converted to polystyrene of not less than $1.5 \times 10^5$, wherein the amount of the aromatic vinyl compound bonded ($S_2$) (mass%) in the low-molecular weight polymer component (B) and a vinyl bond content ($V_2$) (%) of a conjugated diene compound portion in the low-molecular weight polymer component (B) satisfy a relation of the following equation (I):

$$S_2 + V_2/2 < 25 \cdots (I).$$

The second rubber composition according to the invention is characterized by compounding more than 1 part by mass but less than 30 parts by mass of a low-molecular weight polymer component (B), which is a copolymer of an aromatic vinyl compound and a conjugated diene compound or a polymer of a conjugated diene compound having an amount of the aromatic vinyl compound bonded ($S_2$) of less than 30 mass% and has a weight average molecular weight as converted to polystyrene of $4.0 \times 10^4$-$8.0 \times 10^4$, and not less than 5 parts by mass of a filler (C) based on 100 parts by mass of a high-molecular weight polymer component (A), which is a copolymer of an aromatic vinyl compound and a conjugated diene compound or a polymer of a conjugated diene compound having an amount of the aromatic vinyl compound bonded ($S_1$) of not more than 80 mass% and has a weight average molecular weight as converted to polystyrene of not less than $1.5 \times 10^5$, wherein the amount of the aromatic vinyl compound bonded ($S_1$) (mass%) and a vinyl bond content ($V_1$) (%) of a conjugated diene compound portion in the high-molecular weight polymer component (A) and the amount of the aromatic vinyl compound bonded ($S_2$) (mass%) and a vinyl bond content ($V_2$) (%) of a conjugated diene compound portion in the low-molecular weight polymer component (B) satisfy a relation of the following equation (II):

$$S_1 + S_2 + (V_1 + V_2)/2 < 35 \cdots (II).$$

In the rubber composition according to the invention, a total of the amount of the aromatic vinyl compound bonded ($S_1$) and the amount of the aromatic vinyl compound bonded ($S_2$) is not more than 5 mass%.

In a preferable embodiment of the rubber composition according to the invention, a chloroform extractability after vulcanization is not less than 15 mass% based on the mass of the low-molecular weight polymer component (B).

In the rubber composition according to the invention, the low-molecular weight polymer component (B) has a weight average molecular weight as converted to polystyrene of $4.0 \times 10^4$-$8.0 \times 10^4$.

In the rubber composition according to the invention, the low-molecular weight polymer component (B) is preferable to be included in an amount of 5-25 parts by mass based on 100 parts by mass of the high-molecular weight polymer component (A).

Also, the tire according to the invention is characterized by using the above-described rubber composition in a tread portion.

## EP 2 447 317 B1

EFFECTS OF THE INVENTION

According to the invention, there can be provided a rubber composition having an excellent processability but also improving storage modulus (G') and loss tangent (tan $\delta$) at a low temperature and further improving a wear resistance by compounding a low-molecular weight polymer component having specified amount of an aromatic vinyl compound bonded and weight average molecular weight and a filler in specified amounts based on a high-molecular weight polymer component having specified amount of an aromatic vinyl compound bonded and weight average molecular weight and further controlling microstructures of the high-molecular weight polymer component and the low-molecular weight polymer component. Also, there can be provided a tire using such a rubber composition in a tread portion and improving a wear resistance while highly balancing a wet performance and an on-ice performance.

MODE FOR CARRYING OUT THE INVENTION

The invention will be described in detail below. The rubber composition according to the invention is characterized in that 100 parts by mass of a high-molecular weight polymer component (A), which is a copolymer of an aromatic vinyl compound and a conjugated diene compound or a polymer of a conjugated diene compound having an amount of the aromatic vinyl compound bonded ($S_1$) of not more than 80 mass% and has a weight average molecular weight as converted to polystyrene of not less than $1.5 \times 10^5$, is compounded with more than 1 part by mass but less than 30 parts by mass of a low-molecular weight polymer component (B), which is a copolymer of an aromatic vinyl compound and a conjugated diene compound or a polymer of a conjugated diene compound having an amount of the aromatic vinyl compound bonded ($S_2$) of less than 30 mass% and has a weight average molecular weight as converted to polystyrene of $4.0 \times 10^4$-$8.0 \times 10^4$, and not less than 5 parts by mass of a filler (C), and the amount of the aromatic vinyl compound bonded ($S_2$) (mass%) in the low-molecular weight polymer component (B) and a vinyl bond content ($V_2$) (%) of a conjugated diene compound portion in the low-molecular weight polymer component (B) satisfy a relation of the above-mentioned equation (I), or the amount of the aromatic vinyl compound bonded ($S_1$) (mass%) and a vinyl bond content ($V_1$) (%) of a conjugated diene compound portion in the high-molecular weight polymer component (A) and the amount of the aromatic vinyl compound bonded ($S_2$) (mass%) and a vinyl bond content ($V_2$) (%) of a conjugated diene compound portion in the low-molecular weight polymer component (B) satisfy a relation of the above-mentioned equation (II).

The inventors have made studies and found that the low-molecular weight polymer component (B) having the amount of the aromatic vinyl compound bonded of less than 30 mass% and the weight average molecular weight as converted to polystyrene of $4.0 \times 10^4$-$8.0 \times 10^4$ is compounded into the high-molecular weight polymer component (A) having the amount of the aromatic vinyl compound bonded of not more than 80 mass% and the weight average molecular weight as converted to polystyrene of not less than $1.5 \times 10^5$ and further the microstructures of the high-molecular weight polymer component (A) and the low-molecular weight polymer component (B) are controlled so as to satisfy the equation (I) or equation (II), whereby the storage modulus (G') and loss tangent (tan $\delta$) at a low temperature can be improved while improving the processability of the rubber composition. Further, more than 1 part by mass but less than 30 parts by mass of such a low-molecular weight polymer component (B) and not less than 5 parts by mass of the filler (C) are compounded based on 100 parts by mass of the high-molecular weight polymer component (A), whereby the wear resistance can be further improved without deteriorating the above-mentioned effects. Thus, a tire using such a rubber composition in a tread portion can improve the wear resistance while highly balancing the wet performance and the on-ice performance.

The high-molecular weight polymer component (A) used in the rubber composition according to the invention is required to have a weight average molecular weight as converted to polystyrene of not less than $1.5 \times 10^5$, preferably $3.0 \times 10^5$-$1.5 \times 10^6$. When the weight average molecular weight of the high-molecular weight polymer component (A) as converted to polystyrene is less than $1.5 \times 10^5$, the Mooney viscosity of the rubber composition is lowered in the compounding of the low-molecular weight polymer component (B), and hence the fracture properties and the wear resistance are deteriorated but also the processability is deteriorated significantly.

The high-molecular weight polymer component (A) is a copolymer of an aromatic vinyl compound and a conjugated diene compound or a polymer of a conjugated diene compound, wherein the amount of the aromatic vinyl compound bonded ($S_1$) is required to be not more than 80 mass%, preferably not more than 30 mass%. When the amount of the aromatic vinyl compound bonded ($S_1$) exceeds 80 mass%, the processability, storage modulus (G') and loss tangent (tan $\delta$) cannot be balanced.

The rubber composition according to the invention is required to contain more than 1 part by mass but less than 30 parts by mass, preferably 5-25 parts by mass, particularly preferably 15-20 parts by mass of the low-molecular weight polymer component (B) based on 100 parts by mass of the high-molecular weight polymer component (A). Since the low-molecular weight polymer component (B) acts in the same manner as in a usual softening agent during milling, if the polymer component (B) is compounded in not less than a certain amount, a torque is not applied during milling and the dispersibility of the filler is deteriorated. In particular, when the glass transition temperatures (Tg) of the high-molecular weight polymer component (A) and the low-molecular weight polymer component (B) are low, the polymer components are soft and hence the deterioration of the dispersibility becomes remarkable. In the rubber composition according to the invention, therefore, the deterioration of the dispersibility of the filler can be suppressed to improve the heat build-up, wear resistance and fracture properties by limiting the content of the low-molecular weight polymer component (B) to the above-specified range. When the content of the low-molecular weight polymer component (B) is not more than 1 part by mass based on 100 parts by mass of the high-molecular weight polymer component (A), the effect of improving the wet performance and the on-ice performance is not obtained, while when it is not less than 30 parts by mass, the dispersibility of the filler is deteriorated.

The low-molecular weight polymer component (B) used in the rubber composition according to the invention is required to have a weight average molecular weight as converted to polystyrene of $4.0 \times 10^4$-$8.0 \times 10^4$. In the rubber composition highly-filled with a filler such as carbon black, it is common that the filler is not sufficiently dispersed and hence the dispersion defect is caused to deteriorate the heat build-up, wear resistance and fracture properties. On the contrary, the low-molecular weight polymer component (B) has a molecular weight in the above-specified range and can be compounded as a polymer component, and hence in the rubber composition compounded with such a low-molecular weight polymer component (B), the filler such as carbon black can be diluted sufficiently and the dispersion defect of the filler can be suppressed to improve the heat build-up, wear resistance and fracture properties. When the weight average molecular weight of the low-molecular weight polymer component (B) as converted to polystyrene is less than $4.0 \times 10^4$, the effect of improving the wet performance and the on-ice performance cannot be obtained, while when it exceeds $8.0 \times 10^4$, the effect of improving the wet performance and the on-ice performance cannot be obtained but also the processability is deteriorated.

The low-molecular weight polymer component (B) is a copolymer of an aromatic vinyl compound and a conjugated diene compound or a polymer of a conjugated diene compound, wherein an amount of the aromatic vinyl compound bonded ($S_2$) is required to be less than 30 mass%, preferably not more than 15 mass%, and it is particularly preferable to contain no aromatic vinyl compound. When the amount of the aromatic vinyl compound bonded ($S_2$) in the low-molecular weight polymer component (B) is not less than 30 mass%, the entanglement of the low-molecular weight polymer component (B) is hardly caused, and hence the effect of improving the wet performance and the on-ice performance is insufficient and further the flexibility at a low temperature is deteriorated.

The low-molecular weight polymer component (B) is preferable to have a vinyl bond content of the conjugated diene compound portion of not more than 80%. When the vinyl bond content of the conjugated diene compound portion exceeds 80%, there is a tendency that the storage modulus (G') at a low temperature rises to deteriorate the on-ice performance.

In the rubber composition according to the invention, it is required that the amount of the aromatic vinyl compound bonded ($S_2$) (mass%) in the low-molecular weight polymer component (B) and the vinyl bond content ($V_2$) (%) of the conjugated diene compound portion in the low-molecular weight polymer component (B) satisfy the relation of the equation (I), or the amount of the aromatic vinyl compound bonded ($S_1$) (mass%) and the vinyl bond content ($V_1$) (%) of the conjugated diene compound portion in the high-molecular weight polymer component (A) and the amount of the aromatic vinyl compound bonded ($S_2$) (mass%) and the vinyl bond content ($V_2$) (%) of the conjugated diene compound portion in the low-molecular weight polymer component (B) satisfy the relation of the equation (II). When the amount of the aromatic vinyl compound bonded and vinyl bond content of the conjugated vinyl compound portion in the rubber composition according to the invention do not satisfy the relation of the equation (I) or equation (II), there is a tendency that the storage modulus (G') at a low temperature largely rises to deteriorate the on-ice performance.

A total of the amount of the aromatic vinyl compound bonded ($S_1$) (mass%) in the high-molecular weight polymer component (A) and the amount of the aromatic vinyl compound bonded ($S_2$) (mass%) in the low-molecular weight polymer component (B) are preferably not more than 5 mass%, more preferably less than 5 mass%. When the total of these amounts of the aromatic vinyl compound bonded exceeds 5 mass%, the storage modulus (G') at a low temperature may rise to deteriorate the on-ice performance.

The rubber composition according to the invention is preferable to have a chloroform extractability after vulcanization of not less than 15 mass%, more preferably 30-98 mass% based on the mass of the low-molecular weight polymer component (B). At this moment, the chloroform extractability after vulcanization is an extraction amount when a vulcanized rubber obtained by vulcanizing the rubber composition according to the invention is extracted with chloroform. When the chloroform extractability after vulcanization is less than 15 mass% based on the mass of the low-molecular weight polymer component (B) included in the rubber composition, the effect of improving the wet performance and the on-ice performance is not obtained sufficiently.

The high-molecular weight polymer component (A) and the low-molecular weight polymer component (B) are produced by copolymerizing an aromatic vinyl compound and a conjugated diene compound or polymerizing a conjugated diene compound. At this moment, the polymerization method of the polymer component is not particularly limited, but includes an anionic polymerization using a lithium-based initiator, a coordination polymerization, an emulsion polymerization using dodecyl mercaptan, and so on. As the aromatic vinyl compound are mentioned styrene, $\alpha$-methylstyrene,

p-methylstyrene, o-methylstyrene, p-butylstyrene, 1-vinylnaphthalene, 3-vinyltoluene, ethylvinylbenzene, divinylbenzene, 4-cyclohexylstyrene, 2,4,6-trimethylstyrene and so on. On the other hand, as the conjugated diene compound are mentioned 1,3-butadiene, isoprene, 1,3-pentadiene, 2,3-dimethyl-1,3-butadiene, 2-phenyl-1,3-butadiene, 1,3-hexadiene, octadiene and so on. Among these monomers, 1,3-butadiene is particularly preferable. Moreover, these monomers may be used alone or in a combination of two or more.

When the high-molecular weight polymer component (A) or the low-molecular weight polymer component (B) is produced through an anionic polymerization, as a polymerization initiator is preferably used an organic alkali metal compound, more preferably a lithium compound. As the lithium compound are mentioned, for example, an alkyl lithium such as ethyllithium, propyllithium, n-butyllithium, sec-butyllithium, t-butyllithium, hexyllithium; an aryl lithium such as phenyl lithium, tolyl lithium; an alkenyl lithium such as vinyl lithium, propenyl lithium; an alkylene dilithium such as tetramethylene dilithium, pentamethylene dilithium, hexamethylene dilithium, decamethylene dilithium; an arylene dilithium such as 1,3-dilithio benzene, 1,4-dilithio benzene; 1,3,5-trilithio cyclohexane, 1,2,5-trilithio naphthalene, 1,3,5,8-tetralithio decane, 1,2,3,5-tetralithio-4-hexyl-anthracene. Among them, n-butyllithium, sec-butyllithium, t-butyllithium and tetramethylene dilithium are preferable and n-butyllithium is particularly preferable. The amount of the polymerization initiator used is determined depending on a polymerization rate in a reaction operation and a molecular weight of a polymer to be produced.

The method for producing the high-molecular weight polymer component (A) or the low-molecular weight polymer component (B) using the polymerization initiator is not particularly limited. For example, a polymer can be produced by polymerizing a monomer in a hydrocarbon solvent inert in the polymerization reaction. As the hydrocarbon solvent inert in the polymerization reaction are mentioned propane, n-butane, isobutane, n-pentane, isopentane, n-hexane, cyclohexane, propene, 1-butene, isobutene, trans-2-butene, cis-2-butene, 1-pentene, 2-pentene, 1-hexene, 2-hexene, benzene, toluene, xylene, ethyl benzene. They may be used alone or in a mixture of two or more.

The anionic polymerization may be carried out in the presence of a randomizer. The randomizer can control the microstructure of the conjugated diene compound portion in the polymer, and more concretely has an action of controlling the vinyl bond content of the conjugated diene compound portion in the polymer, randomizing the conjugated diene compound unit and aromatic vinyl compound unit in the polymer. As the randomizer are mentioned dimethoxybenzene, tetrahydrofuran, dimethoxyethane, diethylene glycol dibutyl ether, diethylene glycol dimethyl ether, bistetrahydrofuryl propane, triethylamine, pyridine, N-methylmorpholine, N,N,N',N'-tetramethyl ethylenediamine, 1,2-dipiperidinoethane, potassium-t-amylate, potassium-t-butoxide, sodium-t-amylate. The amount of the randomizer used is preferably within a range of 0.01-100 molar equivalent per 1 mole of the polymerization initiator.

The anionic polymerization is preferably carried out through a solution polymerization. The concentration of the monomer in the polymerization reaction solution is preferably within a range of 5-50% by mass, more preferably 10-30% by mass. Also, the polymerization system is not particularly limited and may be a batch system or a continuous system.

The polymerization temperature in the anionic polymerization is preferably within a range of 0-150°C, more preferably 20-130°C. Also, the polymerization may be carried out under a developed pressure, but it is preferable to be usually conducted under a pressure enough to keep the monomers used at substantially a liquid phase. When the polymerization reaction is carried out under a pressure higher than the developed pressure, the reaction system is preferable to be pressurized with an inert gas. Moreover, the starting materials used in the polymerization such as the monomers, polymerization initiator, solvent and the like are preferable to be used after the reaction obstructing substances such as water, oxygen, carbon dioxide, protonic compound and the like are previously removed.

On the other hand, when the high-molecular weight polymer component (A) or the low-molecular weight polymer component (B) is produced through the coordination polymerization, as the polymerization initiator is preferably used a rare-earth metal compound, more preferably a combination of the following component (a), component (b) and component (c).

The component (a) used in the coordination polymerization is selected from a rare-earth metal compound, a complex compound of a rare-earth metal compound and a Lewis base. As the rare-earth metal compound are mentioned carboxylate, alkoxide, β-diketone complex, phosphate, phosphite and the like of rare-earth element, and as the Lewis base are mentioned acetylacetone, tetrahydrofuran, pyridine, N,N-dimethylformamide, thiophene, diphenyl ether, triethylamine, organic phosphorus compound, monovalent or bivalent alcohol. As the rare-earth element in the rare-earth metal compound are preferable lanthanum, neodymium, praseodymium, samarium and gadolinium. Among them, neodymium is particularly preferable. As the component (a) are concretely mentioned neodymium tri-2-ethylhexanoate and a complex compound of acetylacetone therewith, neodymium trineodecanoate and a complex compound of acetylacetone therewith, neodymium tri-n-butoxide. These components (a) may be used alone or in a mixture of two or more.

The component (b) used in the coordination polymerization is selected from organic aluminum compounds. As the organic aluminum compound are concretely mentioned a trihydrocarbyl aluminum compound represented by the formula of $R_3A1$, a hydrocarbyl aluminum hydride represented by the formula of $R_2AlH$ or $RAlH_2$ (wherein R is independently a hydrocarbon group having a carbon number of 1-30), a hydrocarbyl aluminoxane compound having a hydrocarbon group with a carbon number of 1-30. As the organic aluminum compound are concretely mentioned trialkyl aluminum, dialkyl aluminum hydride, alkyl aluminum dihydride, alkyl aluminoxane. These compounds may be used alone or in a mixture of two or more. Moreover, as the component (b) is preferably used a combination of aluminoxane and the other organic aluminum compound.

The component (c) used in the coordination polymerization is selected from a compound having a hydrolyzable halogen or a complex compound of a Lewis base therewith; an organic halide having tertiary alkyl halide, benzyl halide or allyl halide; an ionic compound composed of non-coordinate anion and counter cation. As the component (c) are concretely mentioned alkyl aluminum dichloride, dialkyl aluminum chloride, silicon tetrachloride, tin tetrachloride, a complex of zinc chloride and Lewis base such as alcohol, a complex of magnesium chloride and Lewis base such as alcohol, benzyl chloride, t-butyl chloride, benzyl bromide, t-butyl bromide, triphenylcarbonium tetrakis(pentafluorophenyl)borate. These components (c) may be used alone or in a mixture of two or more.

The polymerization initiator may be previously prepared by using the same conjugated diene compound and/or aromatic vinyl compound as the monomer for the polymerization, if necessary, in addition to the above components (a), (b) and (c). Also, a portion or whole of the component (a) or component (c) may be carried on an inert solid in use. The amount of each component used can be properly set depending on a molecular weight of polymer to be produced, but the component (a) is usually 0.001-0.5 mmol per 100 g of monomer. Also, it is preferable that component (b)/component (a) is within a range of 5-1000 and component (c)/component (a) is within a range of 0.5-10 as a molar ratio.

The polymerization temperature in the coordination polymerization is preferably within a range of -80 to 150°C, more preferably -20 to 120°C. As a solvent used in the coordination polymerization can be used the hydrocarbon solvent inert in the reaction as exemplified in the above-mentioned anionic polymerization, and the concentration of the monomer in the reaction solution is the same as in the case of the anionic polymerization. Moreover, the reaction pressure in the coordination polymerization is the same as in the case of the anionic polymerization, and the starting materials used in the reaction are preferable to be used after the reaction obstructing substances such as water, oxygen, carbon dioxide, protonic compound are substantially removed.

In the invention, each reaction solution containing the polymer component (A) or the polymer component (B) may be dried to separate each polymer component and then the resulting polymer component (A) and polymer component (B) may be mixed, or the reaction solution containing the polymer component (A) or the polymer component (B) may be mixed with each other and then dried to obtain the mixture of the polymer component (A) and the polymer component (B).

The rubber composition according to the invention can be blended with common rubber component used in the rubber industry, concretely natural rubber (NR), styrene-butadiene copolymer rubber (SBR), polyisoprene rubber (IR), polybutadiene rubber (BR), ethylene-propylene copolymer, chloroprene rubber (CR), butyl rubber (IIR), halogenated butyl rubber, acrylonitrile-butadiene rubber (NBR) in addition to the high-molecular weight polymer component (A) and the low-molecular weight polymer component (B).

The rubber composition according to the invention is required to contain not less than 5 parts by mass, preferably not less than 20 parts by mass, more preferably 20-80 parts by mass of a filler (C) based on 100 parts by mass of the high-molecular weight polymer component (A). When the content of the filler (C) is less than 5 parts by mass, the effect of improving the wear resistance cannot be obtained sufficiently. As the filler (C) are preferable carbon black and/or silica.

The carbon black is not particularly limited, but includes FEF, SRF, HAF, ISAF and SAF grade carbon blacks. The carbon black is preferable to have an iodine adsorption value (IA) of not less than 60 mg/g and a dibutyl phthalate (DBP) oil absorption of not less than 80 mL/100 g. By compounding carbon black can be improved various properties of the rubber composition, but HAF, ISAF and SAF grade carbon blacks are more preferable from the viewpoint of improving the wear resistance. On the other hand, the silica is not particularly limited, but includes, for example, precipitated silica (silica hydride), fumed silica (silica anhydride), calcium silicate, aluminum silicate. Among them, the precipitated silica is preferable.

The rubber composition according to the invention can be properly compounded with additives usually used in the rubber industry such as a softening agent, an antioxidant, a silane coupling agent, a vulcanization accelerator, an accelerator activator, a vulcanizing agent and the like within a scope of not damaging the object of the invention in addition to the above high-molecular weight polymer component (A), low-molecular weight polymer component (B), additional rubber component and filler (C). As these additives can be preferably used commercially available ones. The rubber composition can be produced by compounding the low-molecular weight polymer component (B), filler (C) and, if necessary, the properly selected various additives into the high-molecular weight polymer component (A) and milling, warming, extruding.

The tire according to the invention is characterized by using the aforementioned rubber composition in a tread portion. The tire using the rubber composition in the tread portion is excellent in the wet performance, on-ice performance and wear resistance. The tire according to the invention is not particularly limited as long as the above rubber composition is used in the tread portion, and can be produced by the usual method. Moreover, as a gas filled into the tire can be used usual air or air having a regulated partial oxygen pressure but also inert gases such as nitrogen, argon, helium.

EXAMPLES

The following examples are given in illustration of the invention and are not intended as limitations thereof.

A polymer (A-1) and polymers (B-1)-(B-3) are synthesized according to the following methods, and the vinyl bond content and weight average molecular weight as converted to polystyrene of the resulting polymers are measured according to the following methods. The results are shown in Table 1.

(1) Microstructure

The vinyl bond content of butadiene portion in the polymer is determined by an infrared method (Morello method).

(2) Weight average molecular weight (Mw)

The weight average molecular weight (Mw) of each polymer as converted to polystyrene is measured through a gel permeation chromatography [GPC: HLC-8020 made by TOSOH, column: GMH-XL (two series columns) made by TOSOH, detector: differential refractometer (RI)] as a standard of monodisperse polystyrene.

<Production Example of Polymer (A-1)>

Into a pressure glass vessel of 800 mL dried and purged with nitrogen are charged 300 g of cyclohexane, 50 g of 1,3-butadiene and 0.66 mmol of ditetrahydrofuryl propane, and further 0.500 mmol of n-butyl lithium (n-BuLi) is added thereto and then polymerization reaction is conducted at 50°C for 1.5 hours. In this case, the polymerization conversion is approximately 100%. Thereafter, 0.5 mL of a solution of 2,6-di-t-butyl-p-cresol (BHT) in isopropanol (BHT concentration: 5 mass%) is added to the polymerization reaction system to stop the polymerization reaction and further the drying is carried out according to a usual manner to obtain a polymer (A-1).

<Production Example of Polymer (B-1)>

Into a pressure glass vessel of 800 mL dried and purged with nitrogen are charged 300 g of cyclohexane, 50 g of 1,3-butadiene and 0.11 mmol of ditetrahydrofuryl propane, and further 3.6 mmol of n-butyl lithium is added thereto and then polymerization reaction is conducted at 50°C for 5.0 hours. In this case, the polymerization conversion is approximately 100%. Thereafter, 0.5 mL of a solution of 2,6-di-t-butyl-p-cresol (BHT) in isopropanol (BHT concentration: 5 mass%) is added to the polymerization reaction system to stop the polymerization reaction and further the drying is carried out according to a usual manner to obtain a polymer (B-1).

<Production Example of Polymers (B-2)-(B-3)>

Polymers (B-2)-(B-3) are synthesized in the same manner as in the polymer (B-1) except that the amount of n-butyl lithium used is changed.

Table 1

| | Weight average molecular weight (Mw) ($\times 10^3$) | Amount of aromatic vinyl compound bonded (mass%) | Vinyl bond content of butadiene portion (%) | Left-hand side of equation (1) $S_2 + V_2/2$ | $S_1 + V_1/2$ |
|---|---|---|---|---|---|
| Polymer (A-1) | 250 | 0 | 45 | - | 22.5 |
| Polymer (B-1) | 25 | 0 | 20 | 10 | - |
| Polymer (B-2) | 60 | 0 | 20 | 10 | - |
| Polymer (B-3) | 110 | 0 | 20 | 10 | - |

Then, a rubber composition having a compounding recipe as shown in Table 2 is prepared according to a usual method by blending polymer (A-1) and polymers (B-1)-(B-3) according to the compounding recipe as shown in Table 2 and further using 250 ml Plastmil (made by Toyo Seiki Corporation). With respect to this rubber composition is evaluated the processability according to the following method. Also, the resulting rubber composition is vulcanized at 160°C for 15 minutes to obtain a vulcanized rubber. With respect to this vulcanized rubber are measured and evaluated the chloroform extractability, storage modulus (G') at -20°C, loss tangent (tan δ) at 0°C and wear resistance according to the following method. The results are shown in Table 3.

(3) Processability

The Mooney viscosity [$ML_{1+4}$/130°C] of the rubber composition is measured at 130°C according to JIS K 6300-1994, and represented by an index on the basis that the Mooney viscosity in the rubber composition of Example 1 is 100. When the index value exceeds 105, it is too hard, while when it is less than 95, it is too soft. In each case, it is not preferable to keep the processability.

(4) Chloroform extractability

A sample of the vulcanized rubber is extracted with chloroform as a solvent through a Soxhlet extractor for 48 hours, and the chloroform extractability (mass%) of the vulcanized rubber based on the mass of the low-molecular weight polymer component (B) is calculated from the residue of the sample of the vulcanized rubber.

(5) Storage modulus (G')

The storage modulus (G') is measured at a temperature of -20°C, a frequency of 10 Hz and a strain of 0.1% by using a viscoelasticity measuring device made by RHEOMETRICS Corporation, and represented by an index on the basis that an inverse number of the storage modulus (G') in the rubber composition of Example 1 is 100. The larger the index value, the lower the storage modulus and the more excellent the on-ice performance.

(6) Loss tangent (tan δ)

The tan δ is measured at a temperature of 0°C, a frequency of 10 Hz and a strain of 0.1 % by using a viscoelasticity measuring device made by RHEOMETRICS Corporation, and represented by an index on the basis that tan δ of the rubber composition of Example 1 is 100. The larger the index value, the more excellent the wet performance.

(7) Wear resistance

A worn amount is measured at a slip ratio of 40% and room temperature by means of a Lambourn abrasion tester, and represented by an index on the basis that an inverse number of the worn amount of Example 1 is 100. The larger the index value, the less the worn amount and the more excellent the wear resistance.

Table 2

| | | Amount compounded (parts by mass) | | |
|---|---|---|---|---|
| | | Compounding 1 | Compounding 2 | Compounding 3 |
| Polymer blend | Polymer (A-1) | 100 | 100 | 100 |
| | Polymer (B) *1 | 1 | 15 | 35 |
| Aromatic oil | | 15 | 15 | 15 |
| Silica *2 | | 35 | 35 | 35 |
| Silane coupling agent *3 | | 4 | 4 | 4 |
| Carbon black *4 | | 35 | 35 | 35 |
| Stearic acid | | 1.5 | 1.5 | 1.5 |
| Zinc white | | 1.5 | 1.5 | 1.5 |
| Antioxidant*5 | | 1 | 1 | 1 |
| Vulcanization accelerator DM *6 | | 0.2 | 0.2 | 0.2 |
| Vulcanization accelerator CZ *7 | | 0.5 | 0.5 | 0.5 |

(continued)

|  | Amount compounded (parts by mass) | | |
|---|---|---|---|
|  | Compounding 1 | Compounding 2 | Compounding 3 |
| Sulfur | 1 | 1 | 1 |

*1 Polymers (B-1)-(B-3) produced by the above method, the kind of the polymer used is shown in Table 3.
*2 Nipsil AQ made by Nippon Silica Corporation.
*3 Si69 made by Degussa Corporation.
*4 ISAF, SEAST 3H made by Tokai Carbon Co., Ltd.
*5 IPPD, N-isopropyl-N'-phenyl-p-phenylenediamine.
*6 Di-2-benzothiazolyl disulfide.
*7 N-cyclohexyl-2-benzothiazolyl sulfenamide.

Table 3

| | | Comparative Example 1 | Comparative Examples 2 | Comparative Example 3 | * Example 1 | Example 2 | Comparative Example 4 | Comparative Example 5 | Comparative Example 6 | Comparative Example 7 |
|---|---|---|---|---|---|---|---|---|---|---|
| Kind of compounding | | Compounding 1 | Compounding 1 | Compounding 1 | Compounding 2 | Compounding 2 | Compounding 2 | Compounding 3 | Compounding 3 | Compounding 3 |
| Kind of polymer (B) | | B-1 | B-2 | B-3 | B-1 | B-2 | B-3 | B-1 | B-2 | B-3 |
| Weight average molecular weight (Mw) of polymer (B)($\times 10^3$) | | 25 | 60 | 110 | 25 | 60 | 110 | 25 | 60 | 110 |
| Microstructure of polymer (B) | Amount of aromatic vinyl compound bonded (mass%) | 0 | 0 | 0 | 0 | 0 | 0 | 0 | 0 | 0 |
| | Vinyl bond content of butadiene portion (%) | 20 | 20 | 20 | 20 | 20 | 20 | 20 | 20 | 20 |
| Chloroform extractability after vulcanization based on mass of polymer (B)(mass%) | | 75 | 50 | 13 | 75 | 50 | 13 | 75 | 50 | 13 |
| Left-hand side of equation (II) $S_1+S_2+(V_1+V_2)/2$ | | 32.5 | 32.5 | 32.5 | 32.5 | 32.5 | 32.5 | 32.5 | 32.5 | 32.5 |
| Storage modulus, G' (-20°C) (index) | | 90 | 91 | 92 | 100 | 105 | 106 | 93 | 89 | 85 |
| Loss tangent, tan$\delta$ (0°C) (index) | | 80 | 83 | 85 | 100 | 105 | 107 | 98 | 95 | 91 |
| Processability (index) | | 80 | 85 | 90 | 100 | 102 | 115 | 104 | 120 | 125 |
| Wear resistance (index) | | 80 | 83 | 85 | 100 | 120 | 118 | 105 | 98 | 90 |
| Examples mashed with a "*" are included by way of reference only. | | | | | | | | | | |

As seen from Table 3, the rubber composition of Example 2 according to the compounding 2 wherein the amount of the low-molecular weight polymer component (B) compounded is more than 1 part by mass but less than 30 parts by mass based on 100 parts by mass of the high-molecular weight polymer component (A) are excellent in each of the on-ice performance, wet performance, processability and wear resistance as compared with the rubber compositions of Comparative Examples 1-3 according to the compounding 1, and excellent in the on-ice performance and wet performance as compared with Comparative Examples 5-7 according to the compounding 3, and excellent in the processability as compared with Comparative Example 4 according to the compounding 3.

## Claims

1. A rubber composition **characterized by** compounding more than 1 part by mass but less than 30 parts by mass of a low-molecular weight polymer component (B), which is a copolymer of an aromatic vinyl compound and a conjugated diene compound or a polymer of a conjugated diene compound having an amount of the aromatic vinyl compound bonded ($S_2$) of less than 30 mass% and has a weight average molecular weight as converted to polystyrene of $4.0 \times 10^4$-$8.0 \times 10^4$, and not less than 5 parts by mass of a filler (C) based on 100 parts by mass of a high-molecular weight polymer component (A), which is a copolymer of an aromatic vinyl compound and a conjugated diene compound or a polymer of a conjugated diene compound having an amount of the aromatic vinyl compound bonded ($S_1$) of not more than 80 mass% and has a weight average molecular weight as converted to polystyrene of not less than $1.5 \times 10^5$,
wherein the amount of the aromatic vinyl compound bonded ($S_2$) (mass%) in the low-molecular weight polymer component (B) and a vinyl bond content ($V_2$) (%) of a conjugated diene compound portion in the low-molecular weight polymer component (B) satisfy a relation of the following equation (I):

$$S_2 + V_2/2 < 25 \cdots (I).$$

2. A rubber composition **characterized by** compounding more than 1 part by mass but less than 30 parts by mass of a low-molecular weight polymer component (B), which is a copolymer of an aromatic vinyl compound and a conjugated diene compound or a polymer of a conjugated diene compound having an amount of the aromatic vinyl compound bonded ($S_2$) of less than 30 mass% and has a weight average molecular weight as converted to polystyrene of $4.0 \times 10^4$-$8.0 \times 10^4$, and not less than 5 parts by mass of a filler (C) based on 100 parts by mass of a high-molecular weight polymer component (A), which is a copolymer of an aromatic vinyl compound and a conjugated diene compound or a polymer of a conjugated diene compound having an amount of the aromatic vinyl compound bonded ($S_1$) of not more than 80 mass% and has a weight average molecular weight as converted to polystyrene of not less than $1.5 \times 10^5$,
wherein the amount of the aromatic vinyl compound bonded ($S_1$) (mass%) and a vinyl bond content ($V_1$) (%) of a conjugated diene compound portion in the high-molecular weight polymer component (A) and the amount of the aromatic vinyl compound bonded ($S_2$) (mass%) and a vinyl bond content ($V_2$) (%) of a conjugated diene compound portion in the low-molecular weight polymer component (B) satisfy a relation of the following equation (II):

$$S_1 + S_2 + (V_1 + V_2)/2 < 35 \cdots (II).$$

3. A rubber composition according to claim 1 or 2, wherein a total of the amount of the aromatic vinyl compound bonded ($S_1$) and the amount of the aromatic vinyl compound bonded ($S_2$) is not more than 5 mass%.

4. A rubber composition according to claim 1 or 2, wherein a chloroform extractability after vulcanization is not less than 15 mass% based on the mass of the low-molecular weight polymer component (B).

5. A rubber composition according to claim 1 or 2, wherein the low-molecular weight polymer component (B) is included in an amount of 5-25 parts by mass based on 100 parts by mass of the high-molecular weight polymer component (A).

6. A tire **characterized by** using a rubber composition as claimed in any one of claims 1-5 in a tread portion.

**Patentansprüche**

1. Kautschukzusammensetzung, **gekennzeichnet durch** das Compoundieren von mehr als 1 Massenteil, jedoch weniger als 30 Massenteilen, einer niedermolekularen Polymerkomponente (B), die ein Copolymer einer aromatischen Vinylverbindung und einer konjugierten Dienverbindung oder ein Polymer einer konjugierten Dienverbindung ist, bei der eine Menge der aromatischen Vinylverbindung von weniger als 30 Masse-% gebunden ist ($S_2$) und die ein gewichtsdurchschnittliches Molekulargewicht, wie in Polystyrol umgewandelt, von $4,0 \times 10^4 - 8,0 \times 10^4$ aufweist, und von nicht weniger als 5 Massenteilen eines Füllstoffs (C), auf 100 Massenteile einer hochmolekularen Polymerkomponente (A) bezogen, die ein Copolymer einer aromatischen Vinylverbindung und einer konjugierter Dienverbindung oder ein Polymer einer konjugierten Dienverbindung ist, bei der eine Menge der aromatischen Vinylverbindung von nicht mehr als 80 Masse-% gebunden ist ($S_1$) und die ein gewichtsdurchschnittliches Molekulargewicht, wie in Polystyrol umgewandelt, von nicht weniger als $1.5 \times 10^5$ aufweist, wobei die Menge der gebundenen aromatischen Vinylverbindung ($S_2$) (Masse-%) in der niedermolekularen Polymerkomponente (B) und ein Vinylbindungsgehalt ($V_2$) (%) eines Anteils konjugierter Dienverbindung in der niedermolekularen Polymerkomponente (B) einem Verhältnis der folgenden Gleichung (I) entsprechen:

$$S_2 + V_2/2 < 25 \qquad \text{(I)}.$$

2. Kautschukzusammensetzung **gekennzeichnet durch** das Compoundieren von mehr als 1 Massenteil, jedoch weniger als 30 Massenteilen, einer hochmolekularen Polymerkomponente (B), die ein Copolymer einer aromatischen Vinylverbindung und einer konjugierten Dienverbindung oder ein Polymer einer konjugierten Dienverbindung ist, bei der eine Menge der aromatischen Vinylverbindung von weniger als 30 Masse-% gebunden ist ($S_2$) und die ein gewichtsdurchschnittliches Molekulargewicht, wie in Polystyrol umgewandelt, von $4,0 \times 10^4 - 8,0 \times 10^4$ aufweist, und von nicht weniger als 5 Massenteilen eines Füllstoffs (C), auf 100 Massenteile einer hochmolekularen Polymerkomponente (A) bezogen, die ein Copolymer einer aromatischen Vinylverbindung und einer konjugierter Dienverbindung oder ein Polymer einer konjugierten Dienverbindung ist, bei der eine Menge der aromatischen Vinylverbindung von nicht mehr als 80 Masse-% gebunden ist ($S_1$) und die ein gewichtsdurchschnittliches Molekulargewicht, wie in Polystyrol umgewandelt, von nicht weniger als $1,5 \times 10^5$ aufweist, wobei die Menge der gebundenen aromatischen Vinylverbindung ($S_1$) (Masse-%) und ein Vinylbindungsgehalt ($V_1$) (%) eines Anteils konjugierter Dienverbindung in der hochmolekularen Polymerkomponente (A) und die Menge der gebundenen aromatischen Vinylverbindung ($S_2$) (Masse %) und ein Vinylbindungsgehalt ($V_2$) (%) eines Anteils der konjugierten Dienverbindung in der niedermolekularen Polymerkomponente (B) einem Verhältnis der folgenden Gleichung (II) entsprechen:

$$S_1 + S_2 + (V_1 + V_2)/2 < 35 \qquad \text{(II)}.$$

3. Kautschukzusammensetzung nach Anspruch 1 oder 2, wobei ein Gesamtes der Menge der gebundenen aromatischen Vinylverbindung ($S_1$) und der Menge der gebundenen aromatischen Vinylverbindung ($S_2$) nicht mehr als 5 Masse-% beträgt.

4. Kautschukzusammensetzung nach Anspruch 1 oder 2, wobei eine Chloroformextrahierbarkeit nach dem Vulkanisieren nicht weniger als 15 Masse-%, auf die Masse der niedermolekularen Polymerkomponente (B) bezogen, beträgt.

5. Kautschukzusammensetzung nach Anspruch 1 oder 2, wobei die niedermolekulare Polymerkomponente (B) in einer Menge von 5 - 25 Massenteilen, auf 100 Massenteile der hochmolekularen Polymerkomponente (A) bezogen, eingeschlossen ist.

6. Reifen, der durch Verwendung einer Kautschukzusammensetzung nach einem der Ansprüche 1 - 5 in einem Laufflächenanteil gekennzeichnet ist.

**Revendications**

1. Composition de caoutchouc **caractérisée par** le malaxage de plus d'une partie en masse mais de moins de 30 parties en masse d'un composant polymère de bas poids moléculaire (B), qui est un copolymère d'un composé vinylique aromatique et d'un composé diène conjugué ou un polymère d'un composé diène conjugué ayant une quantité du composé vinylique aromatique lié ($S_2$) inférieure à 30 % en masse et qui a un poids moléculaire moyen en poids tel que converti en polystyrène de 4,0 x $10^4$ à 8,0 x $10^4$, et non inférieur à 5 parties en masse d'une charge (C) sur la base de 100 parties en masse d'un composant polymère de haut poids moléculaire (A), qui est un copolymère d'un composé vinylique aromatique et d'un composé diène conjugué ou un polymère d'un composé diène conjugué ayant une quantité du composé vinylique aromatique lié ($S_1$) de pas plus de 80 % en masse et qui a un poids moléculaire moyen en poids tel que converti en polystyrène non inférieur à 1,5 x $10^5$,

dans laquelle la quantité du composé vinylique aromatique lié ($S_2$) (% en masse) dans le composant polymère de bas poids moléculaire (B) et une teneur en liaisons vinyliques ($V_2$) (%) d'une portion de composé diène conjugué dans le composant polymère de bas poids moléculaire (B) satisfont une relation de l'équation suivante (I) :

$$S2 + V2/2 < 25 \quad (I)$$

2. Composition de caoutchouc **caractérisée par** le malaxage de plus d'une partie en masse mais de moins de 30 parties en masse d'un composant polymère de bas poids moléculaire (B), qui est un copolymère d'un composé vinylique aromatique et d'un composé diène conjugué ou un polymère d'un composé diène conjugué ayant une quantité du composé vinylique aromatique lié ($S_2$) inférieure à 30 % en masse et qui a un poids moléculaire moyen en poids tel que converti en polystyrène de 4,0 x $10^4$ à 8,0 x $10^4$, et non inférieur à 5 parties en masse d'une charge (C) sur la base de 100 parties en masse d'un composant polymère de haut poids moléculaire (A), qui est un copolymère d'un composé vinylique aromatique et d'un composé diène conjugué ou un polymère d'un composé diène conjugué ayant une quantité du composé vinylique aromatique lié ($S_1$) de pas plus de 80 % en masse et qui a un poids moléculaire moyen en poids tel que converti en polystyrène de pas moins de 1,5 x $10^5$,

dans laquelle la quantité du composé vinylique aromatique lié ($S_1$) (% en masse) et une teneur en liaisons vinyliques ($V_1$) (%) d'une portion de composé diène conjugué dans le composant polymère de haut poids moléculaire (A) et la quantité du composé vinylique aromatique lié ($S_2$) (% en masse) et une teneur en liaisons vinyliques ($V_2$) (%) d'une portion de composé diène conjugué dans le composant polymère de bas poids moléculaire (B) satisfont une relation de l'équation suivante (II) :

$$S1 + S2 + (V1 + V2)/2 < 35 \qquad (II)$$

3. Composition de caoutchouc selon la revendication 1 ou 2, dans laquelle un total de la quantité du composé vinylique aromatique lié ($S_1$) et la quantité du composé vinylique aromatique lié ($S_2$) n'est pas supérieur à 5 % en masse.

4. Composition de caoutchouc selon la revendication 1 ou 2, dans laquelle une extractibilité au chloroforme après vulcanisation n'est pas inférieure à 15 % en masse sur la base de la masse du composant polymère de bas poids moléculaire (B).

5. Composition de caoutchouc selon la revendication 1 ou 2, dans laquelle le composant polymère de bas poids moléculaire (B) est inclus en une quantité de 5 à 25 parties en masse sur la base de 100 parties en masse du composant polymère de haut poids moléculaire (A).

6. Pneumatique **caractérisé par** l'utilisation d'une composition de caoutchouc tel que revendiqué selon l'une quelconque des revendications 1 à 5 dans une portion de bande de roulement.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09194640 A
- JP 3457469 B
- EP 0751181 A